(19) Europäisches Patentamt
European Patent Office
Office européen des brevets

(11) **EP 4 102 667 A1**

(12) **EUROPEAN PATENT APPLICATION**

(43) Date of publication:
**14.12.2022  Bulletin 2022/50**

(21) Application number: **21178476.4**

(22) Date of filing: **09.06.2021**

(51) International Patent Classification (IPC):
**H02H 9/00** (2006.01)    **H02M 1/36** (2007.01)
**H02M 7/06** (2006.01)

(52) Cooperative Patent Classification (CPC):
**H02H 9/002; H02M 1/36; H02M 7/062**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Bejmert, Daniel**
  **58-160 Cieszow (PL)**
• **Böhme, Klaus**
  **12305 Berlin (DE)**
• **Rebizant, Waldemar**
  **53-641 Wroclaw (PL)**

(54) **METHOD, DEVICE, AND SYSTEM FOR CONTROLLED ENERGIZING OF A TRANSFORMER IN A POWER GRID**

(57) The invention relates to a method for energizing a transformer (11) in a three-phase power grid (10), wherein the phases (L1, L2, L3) of the transformer (11) are switched-on asynchronously in a manner to reduce inrush-currents flowing in the power grid (10).

To avoid high inrush currents with any possible transformer configuration, the following steps are performed:
- determining a remanent magnetic flux in the respective phases (L1, L2, L3) of the transformer (11);
- determining a sequence for switching-on the respective phases of the transformer (11), wherein the sequence depends on mechanical construction properties of the transformer (11) ;

- calculating a phase angle of an electric voltage at which at least one phase is to be switched-on first;
- calculating, for the remaining phases, a respective time delay after switching-on of the at least one first phase; and
- generating switching signals to switch-on the at least one first phase at the determined phase angle of the electric voltage signal and to switch-on the remaining phases at the time defined by the determined respective time-delay.

The invention is also related to a corresponding device and system to perform such a method.

FIG 1

EP 4 102 667 A1

**Description**

(FIELD OF THE INVENTION)

The invention is related to a method for energizing a transformer in a three-phase power grid, wherein the phases of the transformer are switched-on asynchronously in a manner to reduce inrush-currents flowing in the power system. The invention is directed also to a corresponding device and a system for energizing a transformer in a three-phase power grid.

It is commonly known that during uncontrolled power transformer energization significant inrush currents are usually observed. These currents are of high magnitude and are rich with higher harmonics and DC components. Inrush situations may deteriorate power system reliability, lead to maloperation of transformer protective relays and can also affect the transformer lifecycle. The intensity of a magnetizing inrush depends mainly on the remanent magnetic flux of the energized transformer, a power system impedance, a power transformer nominal power and a voltage switching angle. Since possibilities to influence the first parameters during energization of the transformer are limited, controlling the voltage switching angle is normally considered. Hence, to reduce transformer inrush currents, a controlled switching-on of the power transformer switches (e.g. circuit breakers - CBs) can be applied. Such a controlled switching is also known as Point-on-Wave-Switching ("PoWS"). To properly realize this procedure, transformer CBs' switching instants need to be precisely determined.

(BACKGROUND OF THE INVENTION)

To mitigate transformer inrush currents such methods as demagnetization and damping elements application have been used. A method to demagnetize a transformer is described in F. de León, A. Farazmand and S. Jazebi, "Elimination of Residual Flux in Transformers by the Application of an Alternating Polarity DC Voltage Source", IEEE TRANSACTIONS ON POWER DELIVERY, vol. 30, no. 4, August 2015, 1727- 1734. The article P. T. Cheng, W. T. Chen, Y. H. Chen, C. L Ni and J. Lin, "A Transformer Inrush Mitigation Method for Series Voltage Sag Compensators", IEEE Transactions on Power Electronics, vol. 22, no. 5, 2007, pp.1890 - 1899, describes a damping element application for a transformer. Disadvantages of such methods are high efforts to install additional components in the primary power system. Therefore, sequential phase energization and Point-on-Wave-Switching (PoWS) switching seem to be promising techniques to avoid the requirement of additional components.

An exemplary method to reduce inrush currents using PoWS is known from US 7,982,341 B2. This method requires voltage and current measurements and is thus rather complex. Other methods for PoWS are disclosed in US 7,095,139 B2, US 9,379,535 B2 and US 2010/0039737 A1. The disclosed methods are only working for specific transformer configurations. Thus there is a lack of a universal solution that works well for with all transformers.

It is therefore an objective of the invention to provide a method and a respective device and system with which high inrush currents can be avoided with any possible transformer configuration.

(SUMMARY OF THE INVENTION)

The object of the invention is achieved by the independent claims. The dependent claims describe advantageous developments and modifications of the invention.

The invention describes a PoWS procedure and considers transformers of different configurations, like vector groups and core types. The described PoWS procedures give formulas the determination of switching instants for each phase for wide range of possible three-winding transformer constructions.

In accordance with the invention there is provided a method for energizing a transformer in a three-phase power grid that is further characterized in that the following steps are performed: determining a remanent magnetic flux in the respective phases of the transformer; determining a sequence for switching-on the respective phases of the transformer, wherein the sequence depends on mechanical construction properties of the transformer; calculating a phase angle of an electric voltage at which at least one phase is to be switched-on first; calculating, for the remaining phases, a respective time delay after switching-on of the at least one first phase; and generating switching signals to switch-on the at least one first phase at the determined phase angle of the electric voltage signal and to switch-on the remaining phases at the time defined by the determined respective time-delay.

An advantage of the method according to the invention is that the switching sequence is being determined taking into account the mechanical construction properties of the transformer. Such mechanical construction properties can include - but are not limited to - a vector group of the transformer and the transformer's core type. Another advantage is that for the first phase(s) to be energized, a phase angle of the voltage is being determined, providing some flexibility with regard to the instant in time when the switching procedure is to be started.

According to an advantageous embodiment of the claimed method, the step of determining the sequence comprises determining whether one or two phases shall be switched-on first.

Thus, the construction of the transformer can be considered even better.

According to a second advantageous embodiment of the claimed method, it is provided that, in the case that only one phase is being switched-on first, the phase with the highest remanent magnetic flux is switched-on first, or, in the case that two phases are being switched-on first, the phases with the highest difference between their remanent magnetic fluxes are switched-on first.

Such a sequence is advantageous to reduce the magnetic flux in the transformer quite fast.

In this context, according to a further advantageous embodiment of the claimed method, the phase angle is being calculated taking into account whether one or two phases are switched-on first.

Thus, also the calculation of the phase angle can be performed considering the construction of the transformer.

According to a further advantageous embodiment of the claimed invention, the step of determining the remanent magnetic flux comprises calculating the magnetic flux per phase using phase voltage values that have been measured immediately before de-energization of the transformer.

Thus, the remanent magnetic flux can be calculated very easily, based only on voltage values and without the need of additional current values. The residual magnetic flux can be calculated e.g. by integration of the voltages applied to the transformer winding terminals according to the following formula:

$$\Psi(n) = (T_0 - T_0 \cdot A) \cdot U(n-1) + A \cdot \Psi(n-1) \qquad (1)$$

where

$$A = e^{-\frac{1}{f_s T_0}} \qquad (2)$$

$f_s$ - sampling frequency,
$T_0$ - procedure time constant (higher value gives higher accuracy but decreases measurement dynamics).

According to a further advantageous embodiment of the claimed invention, for calculating the respective time-delay, the mechanical properties of the transformer are taken into account.

Thus, the construction of the transformer can also be considered when calculating the time delays for the remaining phase(s), resulting in a very accurate determination of the switching instants for each specific transformer.

The objective mentioned above is also achieved by a device for determining switching signals to energize a transformer in a three-phase power grid, wherein the phases of the transformer are switched-on asynchronously in a manner to reduce inrush-currents flowing in the power system, the device containing a measurement unit to receive electric measurement signals from one side of the transformer, a processing unit to determine, based on the electric measurement signals, switching signals to switch-on the respective phases of the transformer; and a command output to provide the switching signals to a transformer switch, wherein the processing unit is configured to perform steps according the method of one of claims 1 to 7.

The device can be an electric protection relay, a dedicated switching unit that interacts with a transformer switch or can be integrated in a central controller to monitor, control and/or protect the power system.

The objective mentioned above is also achieved by a system for energizing a transformer in a three-phase power grid, wherein the phases of the transformer are switched-on asynchronously in a manner to reduce inrush-currents flowing in the power system, wherein the system comprises a device according to one of the claims 8 to 11, and a transformer switch, that is connected to the command output of the device and is configured to switch-on the phases of the transformer separately according to the switching signals received from the device.

Finally, the objective mentioned above is also achieved by a computer program product comprising instructions which, when the program is executed by a computer, cause the computer to carry out the steps of the method of any of the claims 1-7.

(BRIEF DESCRIPTION OF THE DRAWINGS)

Embodiments of the invention are now described, by way of example only, with reference to the accompanying drawings, of which:

Figure 1    shows a schematic overview of a part of a power system with a transformer and a device for determining switching instants to energize the transformer;

Figure 2    shows a more detailed schematic overview of a device for determining switching instants to energize the transformer;

Figure 3    shows an exemplary flow chart of a method to determine switching instants for energizing a transformer; and

Figure 4    shows graphs with a comparison of transformer currents with synchronized switching and controlled switching.

(DESCRIPTION OF THE DRAWINGS)

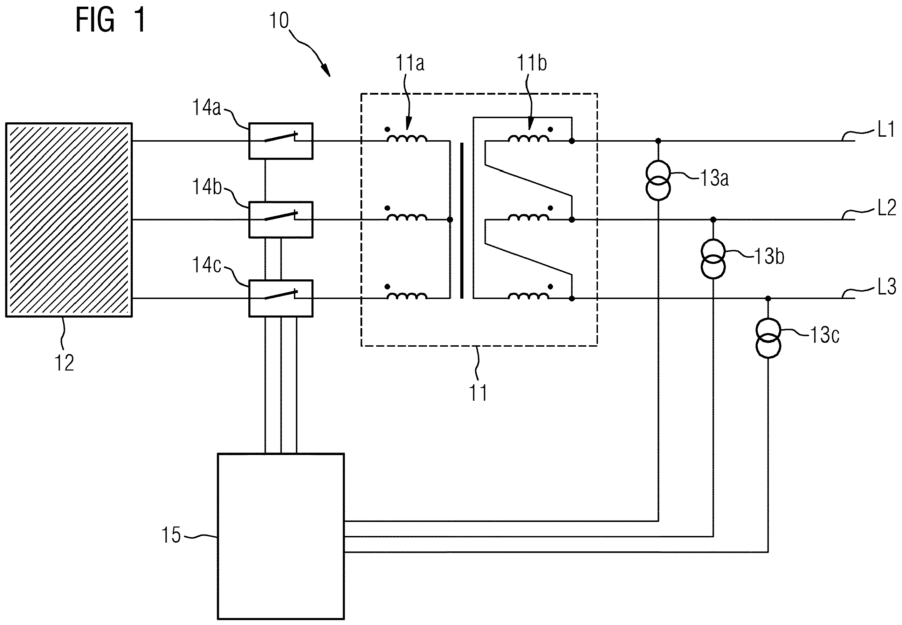

Figure 1 shows a schematic overview of a part of a three-phase power system 10, comprising phases L1, L2 and L3. A power transformer 11, in an Yd1 arrangement, transforms the voltage from a higher voltage primary side 11a to a lower voltage on the secondary side 11b, and is powered from a power grid 12 at the high voltage side. At a measurement location on the lower voltage side, the respective phase voltages are being measured using voltage sensors 13a, 13b, 13c, and a respective three-phase measurement signal is produced and fed to a device 15, which can be a protection relay, a dedicated switching unit or a central controller of the power system 10. The respective phases L1, L2, L3 of the transformer can be switched on and off using switches 14a, 14b, 14c, which can e.g. be circuit breakers. Switching commands can be provided by the device 15.

The switches 14a-c can be disconnected e.g. in the case of a fault. When the switches 14a-c are being connected again, e.g. after fault clearance, high inrush-currents can occur due to remanent magnetic flux in the transformer 11. Such inrush-currents can disturb the protection functions of protective relays (e.g. the device 15) in the power system 10 and even damaging primary equipment of the power system 10, like the transformer 11 or the switches 14a-c. Therefore, using the device 15, switching instants for switching-on the respective phases L1, L2, L3, are being determined in order to energize the transformer while at the same time minimizing the inrush-currents.

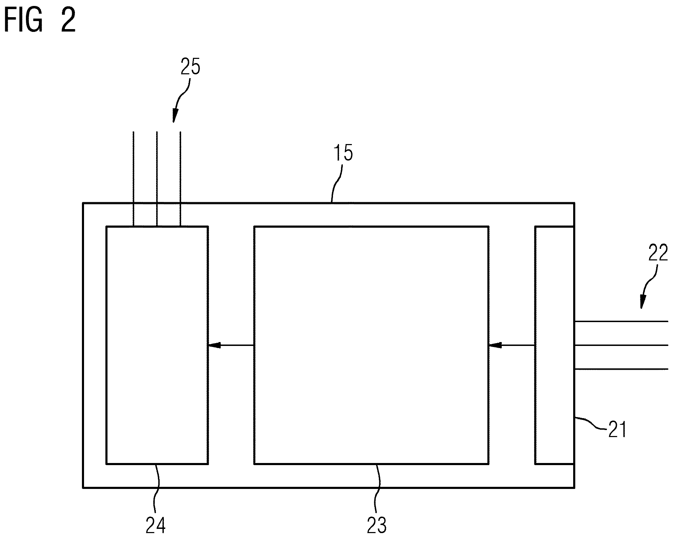

Figure 2 shows an exemplary structure of the device 15. The device 15 contains a measurement unit 21 to receive and preprocess the measurement signal, the is fed into the measurement unit 21 at a measurement input 22. The device 15 further contains a processing unit 23 to analyze the measurement signal and to execute a PoWS (Point on Wave Switching) scheme by determining appropriate switching instants to energize the transformer without causing high inrush-currents. The device 15 also comprises a command unit 24 to transmit, via a command interface 25, phase-related switching signals to the switches 14a-c to connect the transformer 11 to the power grid 12. If the device 15 is a protective relay, the processing unit 23 might be configured to detect faults in the power system 10 and to produce a tripping command to trip the switches 14a-c and deenergize the transformer 11 in case of a detected fault.

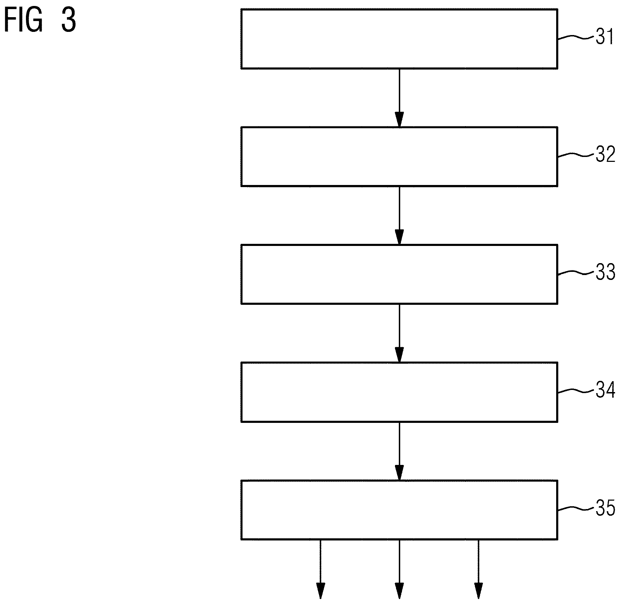

A general overview of a method for performing the proposed PoWS procedure scheme is depicted in Fig. 3. The proposed PoWS procedure consists of five stages. In the first stage 31, phase voltages related to the voltages in the respective phases L1, L2, L3 before disconnecting the transformer are measured. The voltage measurement signals may be saved in a data storage of the device 15 for further processing. In the example of figure 1, the voltages are measured at the secondary side 11b (lower voltage side) of the transformer 11 using the voltage sensors 13a-c.

In a next step 32, remanent magnetic fluxes referred to the transformer energized side (in figure 1, this is the primary side 11a) are determined, using the measured voltages of step 31. Since in the exemplary case of figure 1 the voltages are measured at the secondary side while the transformer 11 is energized from the primary side 11a, the calculated values indicating the phase-related magnetic fluxes have to be converted into corresponding voltage values at the primary side using the transformer vector group (in this exemplary case: Yd1), in the same way as it is usually done in a case of voltages and current transformation. As an alternative, the saved voltage values could be converted first, and the magnetic fluxes could then be calculated using the converted voltages.

If, in an alternative configuration, the voltage values would be measured on the same side, which is also the energizing side, the voltage values could be used directly for calculating the remanent magnetic flux.

The remanent magnetic flux $\Psi$ can be calculated by integration of the measured phase voltages according to formula (1) mentioned above:

$$\Psi(n) = (T_0 - T_0 \cdot A) \cdot U(n-1) + A \cdot \Psi(n-1) \tag{1}$$

where

$$A = e^{-\frac{1}{f_s T_0}} \tag{2.2}$$

$f_s$ - sampling frequency,

$T_0$ - procedure time constant (higher value gives higher accuracy but decreases measurement dynamics).

In a next step 33, an energization sequence for switching-on the respective phases L1, L2, L3 of the transformer is determined. It is recommended (but not mandatory) that the first energized phase should be the phase with the highest remanent flux. It is possible to switch-on a single phase or two phases jointly. Thus, in a case of single-phase energization, phase X should be energized first where

$$\Psi_{res\_X} = max \left( \Psi_{res\_L1}, \ \Psi_{res\_L2}, \ \Psi_{res\_L3} \right) \qquad (3)$$

while in a case of two-phase energization, phases XY should be energized first where

$$\Psi_{res\_XY} = max \left( \Psi_{res\_L1} - \Psi_{res\_L2}, \ \Psi_{res\_L2} - \Psi_{res\_L3}, \ \Psi_{res\_L3} - \Psi_{res\_L1} \right) \qquad (4)$$

Consequently, it is assumed that:

if X is phase L1, then Y is L2 and Z is L3;
if X is phase L2, then Y is L3 and Z is L1;
if X is phase L3, then Y is L1 and Z is L2.

The basic switching sequence, including the decision whether to switch on one or two phases first, depends on the mechanical properties, like the vector group and the core type, of the transformer, as will be explained later.
In the next step 34 of the method, the phase angle of the voltage signal of the first energized phase/phases is calculated. For this purpose, it is assumed that voltage waveshape at the energized transformer side at the moment of energization has the following form, for phase or phase-to-phase voltages, respectively:

$$U_X(t) = \sqrt{2}U_N \sin\left(\omega t + \varphi_{sw_X}\right) \qquad (5)$$

$$U_{XY}(t) = \sqrt{3}\sqrt{2}U_N \sin\left(\omega t + \varphi_{sw_{XY}}\right) \qquad (6)$$

where:

t is equal to zero at the moment of energization,
$U_N$ is the nominal phase-to-ground voltage,
$\varphi_{sw\_X}$, $\varphi_{sw\_XY}$ are phase angles of the respective voltage signal at the time instant of operation.

To simplify the procedure's realization, the instant of the first phase/phases operation is always defined in terms of a phase angle of switched phase/phases (phase angle of phase-to-ground voltage ($\varphi_{sw\_X}$) in case of single-phase energization, or phase angle of phase-to-phase voltage related to two switched phases ($\varphi_{sw\_XY}$) in case of two-phase energization).
The algorithms for calculating the respective phase angles depend on the switching sequence and, thus, on the mechanical properties of the transformer as well. Exemplary formulas for calculating the phase angle will be described later.
In a next step 35, the time delay for energization of the remaining phase/phases are calculated. The time instant for operation of the remaining consecutive phase/phases (energized after the first energized phase) is always defined as a time delay ($t_{del\_Y}$, $t_{del\_Z}$, $t_{del\_YZ}$) referred to the first energized phase/phases.
To properly realize the PoWS procedure for all possible configurations of a transformer, a set of algorithms to calculate the phase angle of the first energized phase/phases and the time delay of the remaining phase/phases energization are proposed:

Algorithm #1:
According to algorithm #1, the phase angle for a single-phase switching-on is calculated as follows:

$$\varphi_{sw\_X} = arccos\left(\frac{-\Psi_{res\_X}}{\Psi_{max}}\right) \qquad (7)$$

where

$$\Psi_{max} = \left(\frac{\sqrt{2}U_N}{\omega}\right) \qquad (8)$$

Algorithm #2:
According to algorithm #2, the time delay for phases Y and Z in a consecutive switching sequence are calculated as follows:

$$t_{del\_Y} = \frac{120°}{360°f_n} + \frac{1}{\omega}arccos\left(\frac{-\Psi_{res\_Y}}{\Psi_{max}}\right) - t_{del\_X} \qquad (9)$$

$$t_{del\_Z} = \frac{240°}{360°f_n} + \frac{1}{\omega}arccos\left(\frac{-\Psi_{res\_Z}}{\Psi_{max}}\right) - t_{del\_X} \qquad (10)$$

where $f_N$ is a nominal frequency and

$$t_{del\_X} = \frac{1}{\omega}arccos\left(\frac{-\Psi_{res\_X}}{\Psi_{max}}\right) \qquad (11)$$

Algorithm #3:
According to algorithm #3, the time delay for simultaneous switching of phases Y and Z is calculated as follows:

$$t_{del\_YZ} = \frac{1}{\omega}arccos\left(\frac{num}{\sqrt{denom}}\right) \qquad (12)$$

where

$$num = 2sin(\varphi_{sw\_X})cos(\varphi_{YZ}) + 2cos(\varphi_{sw\_X})sin(\varphi_{YZ}) + sin(\varphi_{sw\_X}) \qquad (13)$$

$$\begin{aligned}denom = {} & 4sin^2(\varphi_{sw\_X})sin^2(\varphi_{YZ}) + 4cos^2(\varphi_{sw\_X})cos^2(\varphi_{YZ}) + \\ & 4cos^2(\varphi_{sw\_X})cos(\varphi_{YZ}) + 4cos^2(\varphi_{sw\_X})sin^2(\varphi_{YZ}) + \\ & 4sin^2(\varphi_{sw\_X})cos^2(\varphi_{YZ}) + 4sin^2(\varphi_{sw\_X})cos(\varphi_{YZ}) + \\ & sin^2(\varphi_{sw\_X}) + cos^2(\varphi_{sw\_X}) \qquad (14)\end{aligned}$$

$$\varphi_{sw\_X} = arccos\left(\frac{-\Psi_{res\_X}}{\Psi_{max}}\right) \qquad (15)$$

$$\Psi_{max} = \left(\frac{\sqrt{2}U_N}{\omega}\right) \qquad (16)$$

$$\varphi_{YZ} = -120 \qquad (17)$$

Algorithm #4:
According to algorithm #4, the phase angle for a two-phase switching-on is calculated as follows:

$$\varphi_{sw\_XY} = arccos\left(\frac{-\Psi_{res\_XY}}{\Psi_{max}}\right) \qquad (18)$$

where

$$\Psi_{res\_XY} = \max\left(\left|\Psi_{res\_L1} - \Psi_{res\_L2}\right|, \left|\Psi_{res\_L2} - \Psi_{res\_L3}\right|, \left|\Psi_{res\_L3} - \Psi_{res\_L1}\right|\right) \qquad (19)$$

$$\Psi_{max} = \left(\frac{\sqrt{2}\sqrt{3}U_N}{\omega}\right) \qquad (20)$$

Algorithm #5:
According to algorithm #5, the time delay for switching of phase Z after simultaneous switching of phases X and Y is calculated as follows:

$$t_{del\_Z} = \frac{270°}{360°f_n} + \frac{1}{\omega}arccos\left(\frac{-\Psi_{res\_Z}}{\Psi_{max}}\right) - t_{del\_XY} \qquad (21)$$

where

$$t_{del\_XY} = \frac{1}{\omega}arccos\left(\frac{-\Psi_{res\_XY}}{\Psi_{max}}\right) \qquad (22)$$

$$\Psi_{res\_XY} = \max\left(\left|\Psi_{res\_L1} - \Psi_{res\_L2}\right|, \left|\Psi_{res\_L2} - \Psi_{res\_L3}\right|, \left|\Psi_{res\_L3} - \Psi_{res\_L1}\right|\right) \qquad (23)$$

$$\Psi_{max} = \left(\frac{\sqrt{2}\sqrt{3}U_N}{\omega}\right) \qquad (24)$$

Algorithm #6:
According to an alternative algorithm #6, the time delay for switching of phase Z after simultaneous switching of phases X and Y is calculated as follows:

$$t_{del\_Z} = \frac{1}{\omega}arccos\left(\frac{num}{\sqrt{denom}}\right) \qquad (25)$$

where

$$num = 2sin(\varphi_{sw\_XY})cos(\varphi_Z) + 2cos(\varphi_{sw\_XY})sin(\varphi_Z) + sin(\varphi_{sw\_XY}) \qquad (26)$$

$$\begin{aligned} denom = {}& 4sin^2(\varphi_{sw\_XY})sin^2(\varphi_Z) + 4cos^2(\varphi_{sw\_XY})cos^2(\varphi_Z) + \\ & 4cos^2(\varphi_{sw\_XY})cos(\varphi_Z) + 4cos^2(\varphi_{sw\_XY})sin^2(\varphi_Z) + \\ & 4sin^2(\varphi_{sw\_XY})cos^2(\varphi_Z) + 4sin^2(\varphi_{sw\_XY})cos(\varphi_Z) + \\ & sin^2(\varphi_{sw\_XY}) + cos^2(\varphi_{sw\_XY}) \end{aligned} \qquad (27)$$

$$\varphi_{sw\_XY} = arccos\left(\frac{-\Psi_{res\_XY}}{\Psi_{max}}\right) \tag{28}$$

$$\Psi_{max} = \left(\frac{\sqrt{3}\sqrt{2}U_N}{\omega}\right) \tag{29}$$

$$\varphi_Z = -120 \tag{30}$$

With the above presented six algorithms, the energization sequence, the phase angle of the first energized phase/phases and the switching time delay of the remaining energized phase/phases can be specified according to the method as explained in figure 3 using algorithms alg#1 - alg#6 as indicated for various transformer constructions in the following Table 1, where the switching sequence is shown with regard to single-phase voltages $U_X$, $U_Y$, $U_Z$, as well as phase-to-phase voltages $U_{XY}$, $U_{YZ}$ :

Table 1:

| Vector Group | Core Type | | |
|---|---|---|---|
| | triplex | 3-limb | 5-limb |
| YNyn | *Sequence:* $U_X$, $U_Y$, $U_Z$ $\varphi_{sw\_X}$: alg#1 $t_{del\_Y}$: alg#2 $t_{del\_Z}$: alg#2 | *Sequence:* $U_X$, $U_{YZ}$ $\varphi_{sw\_X}$: alg#1 $t_{del\_YZ}$: alg#3 | *Sequence:* $U_X$, $U_Y$, $U_Z$ $\varphi_{sw\_X}$: alg#1 $t_{del\_Y}$: alg#2 $t_{del\_Z}$: alg#2 |
| YNy | *Sequence:* $U_X$, $U_Y$, $U_Z$ $\varphi_{sw\_X}$: alg#1 $t_{del\_Y}$: alg#2 $t_{del\_Z}$: alg#2 | *Sequence:* $U_X$, $U_{YZ}$ $\varphi_{sw\_X}$: alg#1 $t_{del\_YZ}$ : alg#3 | *Sequence:* $U_X$, $U_Y$, $U_Z$ $\varphi_{sw\_X}$: alg#1 $t_{del\_Y}$: alg#2 $t_{del\_Z}$: alg#2 |

Table 1 (continued):

| Vector Group | Core Type | | |
|---|---|---|---|
| | triplex | 3-limb | 5-limb |
| YNd | *Sequence:* $U_X$, $U_{YZ}$ $\varphi_{sw\_X}$: alg#1 $t_{del\_YZ}$ : alg#3 | *Sequence:* $U_X$, $U_{YZ}$ $\varphi_{sw\_X}$: alg#1 $t_{del\_YZ}$ : alg#3 | *Sequence:* $U_X$, $U_{YZ}$ $\varphi_{sw\_X}$: alg#1 $t_{del\_\_YZ}$: alg#3 |
| Yyn | *Sequence:* $U_{XY}$, $U_Z$ $\varphi_{sw\_XY}$: alg#4 $t_{del\_Z}$: alg#5 | *Sequence:* $U_{XY}$, $U_Z$ $\varphi_{sw\_XY}$: alg#4 $t_{del\_Z}$: alg#5 | *Sequence:* $U_{XY}$, $U_Z$ $\varphi_{sw\_XY}$: alg#4 $t_{del\_Z}$: alg#5 |
| Yy | *Sequence:* $U_{XY}$, $U_Z$ $\varphi_{sw\_XY}$: alg#4 $t_{del\_Z}$: alg#5 | *Sequence:* $U_{XY}$, $U_Z$ $\varphi_{sw\_XY}$: alg#4 $t_{del\_Z}$: alg#5 | *Sequence:* $U_{XY}$, $U_Z$ $\varphi_{sw\_XY}$: alg#4 $t_{del\_Z}$: alg#5 |

(continued)

| Table 1 (continued): | | | |
|---|---|---|---|
| Vector Group | Core Type | | |
| | triplex | 3-limb | 5-limb |
| Yd | *Sequence:* $U_{XY}, U_Z$ <br> $\varphi_{sw\_XY}$: alg#4 <br> $t_{del\_Z}$: alg#5 | *Sequence:* $U_{XY}, U_Z$ <br> $\varphi_{sw\_XY}$: alg#4 <br> $t_{del\_Z}$: alg#5 | *Sequence:* $U_{XY}, U_Z$ <br> $\varphi_{sw\_XY}$: alg#4 <br> $t_{del\_Z}$: alg#5 |
| Dyn | *Sequence:* $U_{XY}, U_Z$ <br> $\varphi_{sw\_XY}$: alg#4 <br> $t_{del\_Z}$: alg#6 | *Sequence:* $U_{XY}, U_Z$ <br> $\varphi_{sw\_XY}$: alg#4 <br> $t_{del\_Z}$: alg#6 | *Sequence:* $U_{XY}, U_Z$ <br> $\varphi_{sw\_XY}$: alg#4 <br> $t_{del\_Z}$: alg#6 |
| Dy | *Sequence:* $U_{XY}, U_Z$ <br> $\varphi_{sw\_XY}$: alg#4 <br> $t_{del\_Z}$: alg#6 | *Sequence:* $U_{XY}, U_Z$ <br> $\varphi_{sw\_XY}$: alg#4 <br> $t_{del\_Z}$: alg#6 | *Sequence:* $U_{XY}, U_Z$ <br> $\varphi_{sw\_XY}$: alg#4 <br> $t_{del\_Z}$: alg#6 |
| Autotransformer | *Sequence:* $U_X, U_{YZ}$ <br> $\varphi_{sw\_X}$: alg#1 <br> $t_{del\_YZ}$ : alg#3 | *Sequence:* $U_X, U_{YZ}$ <br> $\varphi_{sw\_X}$: alg#1 <br> $t_{del\_YZ}$ : alg#3 | *Sequence:* $U_X, U_{YZ}$ <br> $\varphi_{sw\_x}$: alg#1 <br> $t_{del\_YZ}$: alg#3 |

As an example, the procedure when energizing an ungrounded Yd1 transformer from the Y-side shall be described. Independent from the core type, one can take from table 1 the following information:

The switching sequence is dependent from the mechanical properties (in this case mainly from the vector group) and shall be executed as a two-phase switching-on of $U_{XY}$ first, followed by a one-phase switching-on of $U_Z$. The phase angle $\varphi_{sw\,XY}$ for the first switching instant shall be calculated according to algorithm #4, whereas the time delay $t_{del\_Z}$ of phase Z shall be calculated according to algorithm #5.

When voltage measurements are available from the low voltage side (delta side), the magnetic fluxes $\Psi_a$, $\Psi_b$, $\Psi_c$ calculated with the use of the voltages $U_a$, $U_b$, $U_c$ need to be converted onto the high voltage side (wye-side). Thus, first 'phase-to-phase' magnetic fluxes at delta-side are determined:

$$\Psi_{ab} = \Psi_a - \Psi_b$$

$$\Psi_{bc} = \Psi_b - \Psi_c$$

$$\Psi_{ca} = \Psi_c - \Psi_a$$

Then, magnetic fluxes seen from wye-side can be calculated:

$$\Psi_A = \Psi_{ab} \cdot \upsilon$$

$$\Psi_B = \Psi_{bc} \cdot \upsilon$$

$$\Psi_C = \Psi_{ca} \cdot \upsilon$$

Finally, to realize point-on-wave switching of this type of transformer 'phase-to-phase' fluxes at wye-side are determined:

$$\Psi_{AB} = \Psi_A - \Psi_B$$

$$\Psi_{BC} = \Psi_B - \Psi_C$$

$$\Psi_{CA} = \Psi_C - \Psi_A$$

In the case, where only voltage measurement at the wye-side would be available, magnetic fluxes $\Psi_A$, $\Psi_B$, $\Psi_C$ at the energized side can be calculated directly with the use of the voltage measurements $U_A$, $U_B$, $U_C$. Then, since to realize point-on-wave switching of ungrounded Wye transformer phase-to-phase' fluxes at wye-side are required, one may directly calculate these fluxes:

$$\Psi_{AB} = \Psi_A - \Psi_B$$

$$\Psi_{BC} = \Psi_B - \Psi_C$$

$$\Psi_{CA} = \Psi_C - \Psi_A$$

According to table 1, in this case with energization from wye-side, it is necessary to energize two phases simultaneously first (the operation sequence is $U_{XY}$, $U_Z$). It is recommended (but not obligatory) to energize phases with the highest [2]phase-to-phase' residual flux first:

$$\Psi_{res\_XY} = \max\left(\left|\Psi_{res\_A} - \Psi_{res\_B}\right|, \left|\Psi_{res\_B} - \Psi_{res\_C}\right|, \left|\Psi_{res\_C} - \Psi_{res\_A}\right|\right)$$

Then, to eliminate the residual magnetic flux $W_{res\_XY}$ in phase X and Y, the switching angle of the energized phase should be equal to:

$$\varphi_{SW\_XY} = \arccos\left(\frac{-\Psi_{res\_XY}}{\Psi_{max}}\right)$$

where

$$\Psi_{max} = \frac{\sqrt{3}\sqrt{2} \cdot U_n}{\omega}$$

$U_n$ is the nominal value of phase-to-ground voltage on the energized side. When the phase angle of the first energized phases is determined, the switching time delay of the remaining energized phase is calculated according to the following formula:

$$t_{del\_Z} = \frac{270°}{360° \cdot f_n} + \frac{1}{\omega} arccos\left(\frac{-\Psi_{res\_Z}}{\Psi_{max}}\right) - t_{del\_XY}$$

The phase angle information as well as the time delay are being used for generating switching signals for phase-wise closing the switches and thus energizing the transformer. Thanks to the application of the explained switching procedure, inrush currents are reduced to the values only slightly higher than nominal steady-state magnetizing current. Thus, the transformer starts operating from steady-state, without any undesirable magnetizing inrush.

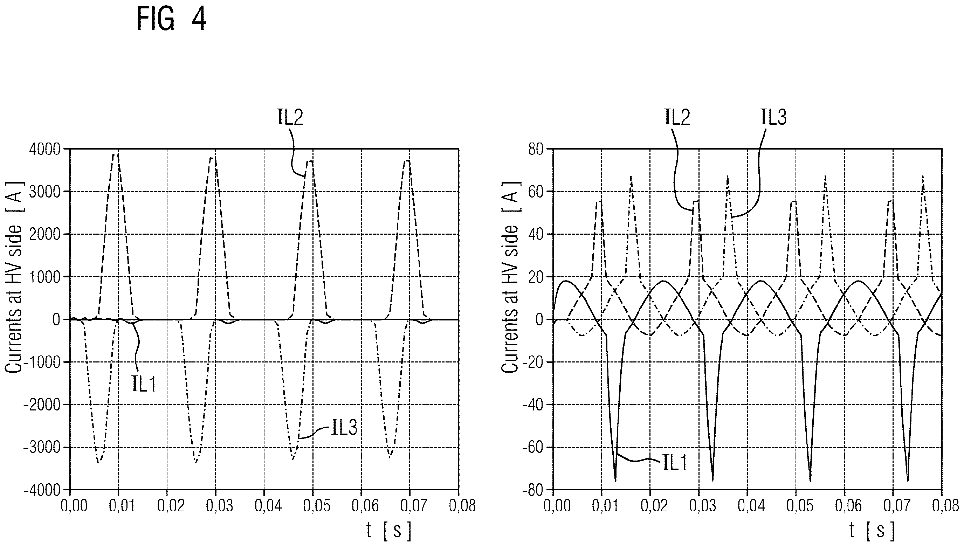

Figure 4, finally, shows a comparison for a YNyn three-limb transformer of inrush currents $I_{L_1}$, $I_{L_2}$, $I_{L_3}$ created during a synchronous switching procedure (left diagram) and a controlled asynchronous energization with use of the proposed PoWS procedure (right diagram). One may see that magnetizing currents were reduced to values close to the nominal steady-state magnetizing current.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

**Claims**

1. A method for energizing a transformer (11) in a three-phase power grid (10), wherein the phases (L1, L2, L3) of the transformer (11) are switched-on asynchronously in a manner to reduce inrush-currents flowing in the power grid (10); **characterized in that** the following steps are performed:

    - determining a remanent magnetic flux in the respective phases (L1, L2, L3) of the transformer (11);
    - determining a sequence for switching-on the respective phases of the transformer (11), wherein the sequence depends on mechanical construction properties of the transformer (11) ;
    - calculating a phase angle of an electric voltage at which at least one phase is to be switched-on first;
    - calculating, for the remaining phases, a respective time delay after switching-on of the at least one first phase; and
    - generating switching signals to switch-on the at least one first phase at the determined phase angle of the electric voltage signal and to switch-on the remaining phases at the time defined by the determined respective time-delay.

2. Method according to claim 1,
   **characterized in that**

    - the step of determining the sequence comprises determining whether one or two phases shall be switched-on first.

3. Method according to claim 2,
   **characterized in that**

    - in the case that only one phase is being switched-on first, the phase with the highest remanent magnetic flux is switched-on first; or
    - in the case that two phases are being switched-on first, the phases with the highest difference between their remanent magnetic fluxes are switched-on first.

4. Method according to claim 2 or 3,
   **characterized in that**

    - the phase angle is being calculated taking into account whether one or two phases are switched-on first.

5. Method according to one of the preceding claims,
   **characterized in that**

    - the step of determining the remanent magnetic flux comprises calculating the magnetic flux per phase (L1, L2, L3) using phase voltage values that have been measured immediately before de-energization of the transformer.

6. Method according to one of the preceding claims,
   **characterized in that**

   - the mechanical properties of the transformer (11) comprise at least a vector group and/or a core type of the transformer (11).

7. Method according to one of the preceding claims,
   **characterized in that**

   - for calculating the respective time-delay, the mechanical properties of the transformer (11) are taken into account.

8. Device (15) for determining switching signals to energize a transformer (11) in a three-phase power grid (10), wherein the phases (L1, L2, L3) of the transformer (11) are switched-on asynchronously in a manner to reduce inrush-currents flowing in the power grid (11), the device (15) containing

   - a measurement unit (21) to receive electric measurement signals from one side of the transformer (11);
   - a processing unit (23) to determine, based on the electric measurement signals, switching signals to switch-on the respective phases (L1, L2, L3) of the transformer (11); and
   - a command output (24) to provide the switching signals to a transformer switch (14a, 14b, 14c);

   **characterized in that**

   - the processing unit (23) is configured to perform steps according the method of one of claims 1 to 7.

9. Device (15) according to claim 8,
   **characterized in that**

   - the device (15) is an electric protection relay.

10. Device (15) according to claim 8,
    **characterized in that**

    - the device (15) is a dedicated switching unit that interacts with a transformer switch (14a, 14b, 14c).

11. Device (15) according to claim 8,
    **characterized in that**

    - the device (15) is integrated in a central controller to monitor, control and/or protect the power grid (10).

12. System for energizing a transformer (11) in a three-phase power grid (10), wherein the phases (L1, L2, L3) of the transformer (11) are switched-on asynchronously in a manner to reduce inrush-currents flowing in the power grid (10), **characterized** in that

    - the system comprises a device (15) according to one of the claims 8 to 11, and a transformer switch (14a, 14b, 14c), that is connected to the command output (24) of the device (15) and is configured to switch-on the phases (L1, L2, L3) of the transformer (11) separately according to the switching signals received from the device (15).

13. Computer program product comprising instructions which, when the program is executed by a computer, cause the computer to carry out the steps of the method of any of the claims 1 - 7.

FIG 1

EP 4 102 667 A1

FIG 2

FIG 3

FIG 4

EP 4 102 667 A1

Europäisches
Patentamt

European
Patent Office

Office européen
des brevets

# EUROPEAN SEARCH REPORT

Application Number

EP 21 17 8476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2010/039737 A1 (KOSHIZUKA TADASHI [JP] ET AL) 18 February 2010 (2010-02-18) * paragraph [0075] - paragraph [0100]; figures 1-6 * * paragraph [0144] - paragraph [0146] * ----- | 1-13 | INV. H02H9/00 H02M1/36 H02M7/06 |
| X | US 2004/124814 A1 (TSUTADA HIROYUKI [JP] ET AL) 1 July 2004 (2004-07-01) | 1,8,12, 13 | |
| A | * paragraph [0038]; figures 1,3 * ----- | 2-7,9-11 | |
| A | US 6 493 203 B1 (ITO HIROKI [JP] ET AL) 10 December 2002 (2002-12-10) * column 11, line 62 - column 12, line 4; figures 1,2,7,13 * ----- | 1-13 | |

TECHNICAL FIELDS
SEARCHED        (IPC)

H02H
H02M

The present search report has been drawn up for all claims

| Place of search | Date of completion of the search | Examiner |
|---|---|---|
| Munich | 30 November 2021 | Lindquist, Jim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 4 102 667 A1**

## ANNEX TO THE EUROPEAN SEARCH REPORT
## ON EUROPEAN PATENT APPLICATION NO.

EP 21 17 8476

30-11-2021

| Patent document cited in search report | | | Publication date | Patent family member(s) | | | Publication date |
|---|---|---|---|---|---|---|---|
| US 2010039737 | A1 | | 18-02-2010 | BR | PI0904820 | A2 | 03-11-2015 |
| | | | | CN | 101609983 | A | 23-12-2009 |
| | | | | JP | 5208593 | B2 | 12-06-2013 |
| | | | | JP | 2010004686 | A | 07-01-2010 |
| | | | | US | 2010039737 | A1 | 18-02-2010 |
| US 2004124814 | A1 | | 01-07-2004 | JP | 3804606 | B2 | 02-08-2006 |
| | | | | JP | 2004208394 | A | 22-07-2004 |
| | | | | US | 2004124814 | A1 | 01-07-2004 |
| US 6493203 | B1 | | 10-12-2002 | CA | 2326091 | A1 | 25-05-2001 |
| | | | | CN | 1308354 | A | 15-08-2001 |
| | | | | DE | 10058028 | A1 | 31-10-2001 |
| | | | | FR | 2811804 | A1 | 18-01-2002 |
| | | | | JP | 2001218354 | A | 10-08-2001 |
| | | | | US | 6493203 | B1 | 10-12-2002 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7982341 B2
- US 7095139 B2
- US 9379535 B2
- US 20100039737 A1

**Non-patent literature cited in the description**

- **F. DE LEÓN ; A. FARAZMAND ; S. JAZEBI.** Elimination of Residual Flux in Transformers by the Application of an Alternating Polarity DC Voltage Source. *IEEE TRANSACTIONS ON POWER DELIVERY,* August 2015, vol. 30 (4), 1727-1734
- **P. T. CHENG ; W. T. CHEN ; Y. H. CHEN ; C. L NI ; J. LIN.** A Transformer Inrush Mitigation Method for Series Voltage Sag Compensators. *IEEE Transactions on Power Electronics,* 2007, vol. 22 (5), 1890-1899